# EUROPEAN PATENT SPECIFICATION

(11) **EP 3 438 489 B1**
(45) Date of publication and mention of the grant of the patent: **03.06.2020**
(21) Application number: 16896835.2
(22) Date of filing: 30.03.2016
(51) Int. Cl.: F16H 3/30, B62M 11/06, F16H 61/04, F16H 63/18, F16H 57/02

(54) **POWER TRANSMISSION DEVICE**
LEISTUNGSÜBERTRAGUNGSVORRICHTUNG
DISPOSITIF DE TRANSMISSION DE PUISSANCE

(43) Date of publication of application: 06.02.2019
(73) Proprietor: Honda Motor Co., Ltd., Tokyo 107-8556 (JP)
(72) Inventor: ADACHI, Jun, Wako-shi Saitama 351-0193 (JP); MORITA, Go, Wako-shi Saitama 351-0193 (JP); ONO, Junya, Wako-shi Saitama 351-0193 (JP); IKEDA, Tsugio, Wako-shi Saitama 351-0193 (JP)
(74) Representative: Kiwit, Benedikt
(86) International application number: PCT/JP2016/060330
(87) International publication number: WO 2017/168615

(56) References cited:
- EP-A1- 1 770 306
- JP-A- 2009 275 760
- JP-A- 2011 075 030
- JP-U- S6 453 553
- US-A1- 2012 118 091
- US-B1- 6 370 977

## Description

### TECHNICAL FIELD

The present invention relates to a power transmission device that includes a clutch outer that is relatively rotatably supported on an input shaft and retains a friction plate, a clutch hub that is relatively non-rotatably supported on the input shaft and retains a clutch plate that can be in frictional contact with the friction plate, a drive gear that is relatively rotatably supported on the input shaft and has an engagement projection, a driven gear that is supported on an output shaft and meshes with the drive gear, and a shifter that is relatively non-rotatably and axially displaceably supported on the input shaft and has an engagement recess that engages with the engagement projection when moving from an axial reference position to an operating position.

### BACKGROUND ART

US 6 370 977 B1 shows a transmission for a vehicle including first and second rotating shafts which are rotatable by the torque transmitted through a clutch. Each shaft includes several transmission gears. A resisting member can be disposed between a gear and its corresponding shaft, such that the resisting member reduces the difference in rotating speed between the first and second shafts. The resisting member serves to reduce shift shock and noise generated during shifting. Additional resisting members can be placed on either the first or second shaft in order to achieve reduced shift shock and noise.
US 2012/118091 A1 shows a motorcycle having a transmission which includes a counter shaft to which a rotation of a crankshaft disposed in an engine is transmitted and a drive shaft to which a rotation of the counter shaft is transmitted. A pair of drive gears are mounted on the counter shaft so as to be rotated integrally with the counter shaft. A pair of driven gears are mounted on the drive shaft so as to be meshed with the pair of drive gears, respectively, to be rotatable therewith. Moreover, a friction ring is interposed between the pair of driven gears.
Patent Document 1 discloses a dog clutch type transmission. In the dog clutch type transmission, when power is transmitted, a second engagement projection of an active gear meshes with a first engagement projection of a follower gear. In this way, the power of an input shaft is transmitted from the active gear to a driven gear of an output shaft via the follower gear. In Patent Document 1, even when the first engagement projection abuts against the second engagement projection to prevent axial movement of the active gear, relative rotation between the active gear and the follower gear occurs, and the first engagement projection can therefore reliably enter a space adjacent to the second engagement projection.

### RELATED ART DOCUMENTS

### PATENT DOCUMENTS

Patent Document 1: Japanese Patent Application Laid-open No. 2007-285449

### SUMMARY OF THE INVENTION

### PROBLEMS TO BE SOLVED BY THE INVENTION

In Patent Document 1, although as described above a joined state is smoothly established between the first engagement projection and the second engagement projection, since an electric actuator is used to produce relative rotation, the structure is complicated, and at the same time the procurement cost and the production cost increase.

The object of the present invention is to provide a power transmission device that enables a joined state between an engagement projection of a drive gear and an engagement recess of a shifter to be smoothly established with a simple structure.

According to the present invention as defined in claim 1, there is provided a power transmission device comprising a clutch outer that is linked to a power input side and retains a friction plate, a clutch hub that is supported relatively rotatably with respect to the clutch outer and retains a clutch plate that can be in frictional contact with the friction plate, an active gear that is linked to the clutch hub and has an engagement projection, a follower gear having an engagement recess and beeing coaxially supported with respect to the active gear which is displaceable in an axial direction, wherein the engagement projection engages with the engagement recess when moving the active gear in the axial direction from an axial reference position to an operating position, and a friction damper that is present between the clutch outer and the clutch hub.

According to a first particular embodiment of the present invention, the clutch outer comprises a clutch gear that retains the friction damper while pressing the friction damper against the clutch hub, a retaining member that is supported on the clutch gear so that the retaining member can undergo relative rotation around the rotating shaft of the clutch hub and that retains the friction plate, and a damper that is disposed between the clutch gear and the retaining member in a peripheral direction and links the clutch gear and the retaining member in the peripheral direction.

According to a second particular embodiment of the present invention, in addition to the first particular embodiment, the friction damper comprises an annular frame body that is fitted into the clutch gear via a shaft end that protrudes from a crankcase and a transmission member that is retained inside the frame body.

According to a third particular embodiment of the present invention, in addition to the second particular embodiment, the power transmission device comprises a starter driven gear for a kick starter that is formed integrally with the clutch gear on the crankcase side of the clutch gear and meshes with a starter drive gear of a kick starter.

According to a fourth particular embodiment of the present invention, preferably in addition to any one of the first to third particular embodiments, the power transmission device comprises a control circuit that stops a combustion action of an engine when a multistage transmission that includes a first shaft supporting a drive gear or a driven gear including the active gear and the follower gear and a second shaft supporting a driven gear or drive gear that can mesh with the above drive gear or driven gear establishes a neutral state in which power transmission between the first shaft and the second shaft is disconnected, and frictional contact between the friction plate and the clutch plate is established, and a starter motor that is connected to a crankshaft of the engine and receives a command signal from the control circuit when the frictional contact is released again in the neutral state, thus automatically starting the crankshaft.

### EFFECTS OF THE INVENTION

In accordance with the present invention, even in a state in which joining between the friction plate and the clutch plate is released, part of the power is transmitted from the clutch outer to the clutch hub by the action of the friction damper. The active gear receives power from the clutch hub and rotates. Relative rotation between the active gear and the follower gear thus occurs. When the active gear moves from the axial reference position to the operating position, even if the engagement projection abuts against the engagement recess to prevent the active gear from moving in the axial direction, the engagement projection can enter a space adjacent to the engagement recess by virtue of relative rotation. In this way, a joined state can be established smoothly between the engagement projection and the engagement recess.

In accordance with the first particular embodiment of the present invention, since the friction damper is retained on the clutch gear, compared with a case in which a friction damper is linked to a retaining member, power that is transmitted to the clutch gear can be transmitted to the clutch hub without going through the damper and without delay.

In accordance with the second particular embodiment of the present invention, since the friction damper is fitted into the clutch gear via the shaft end side, when carrying out assembly, the friction damper can easily be fixed to the clutch gear.

In accordance with the third particular embodiment of the present invention, since in the clutch gear of the clutch outer the starter driven gear is integrated therewith on the side opposite to the friction damper, the radial dimension of the starter driven gear can be decreased.

In accordance with the fourth particular embodiment of the present invention, when the friction clutch, which includes the friction plate and the clutch plate, is disconnected, the multistage transmission establishes a neutral state, and if after that the friction clutch is shifted again to a connected state, idle stop is carried out in the engine, and the combustion action of the engine stops. In this process, since a driving force is not inputted to the input shaft, which supports the drive gear, rotation of the drive gear stops. Since at a time of idle stop a driving force is not inputted into the output shaft either, the output shaft supporting the driven gear, the driven gear also stops rotating. Subsequently, when frictional contact is released again and the friction clutch is disconnected, the starter motor drives the crankshaft. The clutch outer rotates. Since relative rotation occurs between the active gear and the follower gear, the engagement projection can enter a space adjacent to the engagement recess. In this way, a joined state can be established smoothly between the engagement projection and the engagement recess.

### BRIEF DESCRIPTION OF DRAWINGS

[FIG. 1] FIG. 1 is a side view of a two-wheeled motor vehicle. (embodiment)
[FIG. 2] FIG. 2 is a sectional view along line 2-2 in FIG. 1. (embodiment)
[FIG. 3] FIG. 3 is an enlarged partial sectional view showing in detail the arrangement of a multistage transmission. (embodiment)
[FIG. 4] FIG. 4 is an enlarged partial sectional view schematically showing the arrangement of a shift mechanism of the multistage transmission. (embodiment)
[FIG. 5] FIG. 5 is an enlarged partial sectional view schematically showing the arrangement of a clutch. (embodiment)
[FIG. 6] FIG. 6 is an enlarged sectional view showing the arrangement of a friction damper. (embodiment)

### Explanation of Reference Numerals and Symbols

- 25: Engine
- 26: Crankcase
- 31: Crankshaft
- 39: Multistage transmission
- 41: Input shaft
- 42: Output shaft
- 51: Follower gear (low driven gear)
- 52: Active gear (fourth speed driven gear)
- 56: Clutch outer
- 57: Clutch hub
- 58: ACG starter
- 64: Kick starter
- 68: Drive gear for kick starter
- 69: Driven gear for kick starter
- 84: Engagement projection (drive projection)
- 85: Engagement recess (driven recess)
- 96: Clutch gear
- 97: Retaining member
- 98: Friction plate
- 101: Damper
- 105: Clutch plate
- 112: Friction damper
- 113: Frame body
- 114: Transmission member
- 114a: Fixing frame
- 114b: Contact piece

### MODES FOR CARRYING OUT THE INVENTION

One embodiment of the present invention is explained below by reference to the attached drawings. Here, the upper and lower, front and rear, and left and right of a vehicle body are defined based on the point of view of a person riding a two-wheeled motor vehicle.

### EMBODIMENT

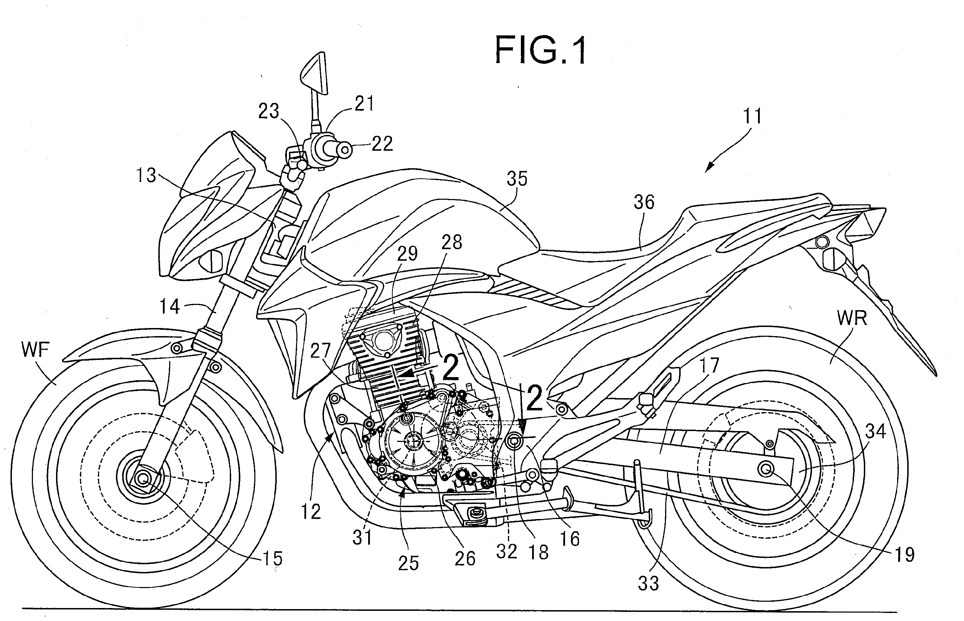

FIG. 1 schematically shows the overall arrangement of a two-wheeled motor vehicle related to one embodiment of the present invention. A two-wheeled motor vehicle 11 includes a vehicle body frame 12. A front fork 14 is steerably supported on a head pipe 13 at the front end of the vehicle body frame 12. A front wheel WF is supported on the front fork 14 so that it can rotate around an axle 15. A swing arm 17 is supported on a pivot frame 16 at the rear end of the vehicle body frame 12 so that it can swing around a support shaft 18 extending horizontally in the vehicle width direction. A rear wheel WR is supported at the rear end of the swing arm 17 so that it can rotate around an axle 19.

Handlebars 21 are joined to the front fork 14 above the head pipe 13. A grip 22 is mounted on left and right ends of the handlebars 21. When traveling, the driver of the two-wheeled motor vehicle 11 grips the respective grips 22 by left and right hands. A clutch lever 23 is incorporated into the left grip 22. The driver can operate the clutch lever 23 with the left hand.

An engine 25 is mounted on the vehicle body frame 12 between the front wheel WF and the rear wheel WR. The engine 25 includes a crankcase 26, a cylinder block 27 joined to the crankcase 26, a cylinder head 28 joined to the cylinder block 27, and a head cover 29 joined to the cylinder head 28. A crankshaft 31 that rotates around an axis extending parallel to the axle 19 of the rear wheel WR is housed in the crankcase 26. The crankshaft 31 rotates in response to axial movement of a piston (not illustrated) slidably fitted into a cylinder bore of the cylinder block 27. Rotation of the crankshaft 31 is transmitted to a drive sprocket 32 via a power transmission device, which is described later. Rotation of the drive sprocket 32 is transmitted to a driven sprocket 34 fixed to the rear wheel WR via a drive chain 33.

A fuel tank 35 is mounted on the vehicle body frame 12 above the engine 25. An occupant seat 36 is mounted on the vehicle body frame 12 to the rear of the fuel tank 35. Fuel is supplied from the fuel tank 35 to a fuel injection device of the engine 25. When driving the two-wheeled motor vehicle 11 an occupant straddles the occupant seat 36.

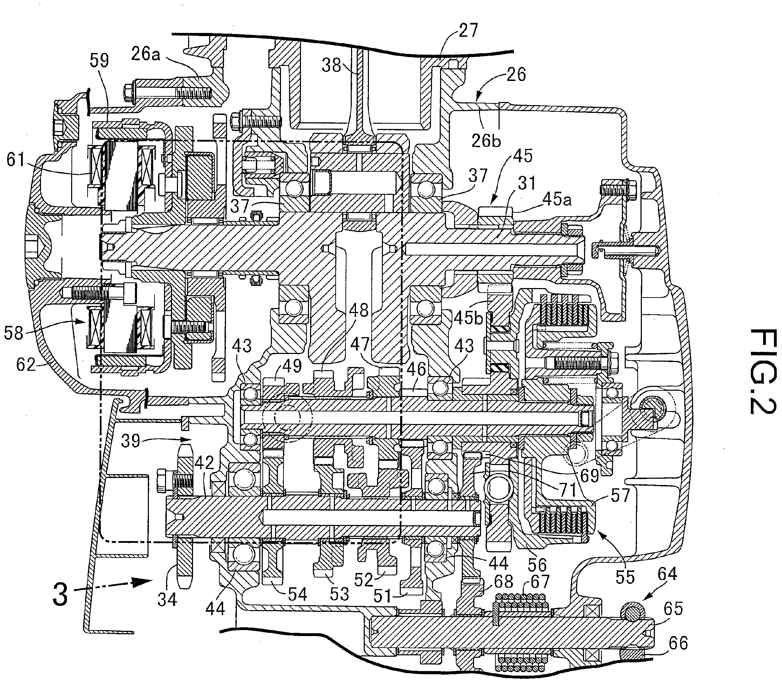

As shown in FIG. 2, the crankcase 26 includes a first case half body 26a and a second case half body 26b. The crankshaft 31 is rotatably supported on the first case half body 26a and the second case half body 26b by means of a bearing 37 fitted into the first case half body 26a and the second case half body 26b. Within the crankcase 26 a connecting rod 38 is linked to the crank of the crankshaft 31. The connecting rod 38 converts axial movement of the piston into rotation of the crankshaft 31.

Incorporated into the engine 25 is a dog clutch type multistage transmission 39. The multistage transmission 39 includes an input shaft 41 and an output shaft 42 having axes parallel to the axis of the crankshaft 31. The input shaft 41 and the output shaft 42 are rotatably supported on the first case half body 26a and the second case half body 26b by means of bearings 43 and 44 fitted into the first case half body 26a and the second case half body 26b respectively. The input shaft 41 is connected to the crankshaft 31 through a primary reduction mechanism 45. The primary reduction mechanism 45 includes a drive gear 45a fixed to the crankshaft 31 and a driven gear 45b relatively rotatably supported on the output shaft 42. The driven gear 45b meshes with the drive gear 45a. The drive sprocket 32 is joined to the output shaft 42.

Four drive gears are disposed on the input shaft 41. The drive gears include in sequence a low drive gear 46, a fourth speed drive gear 47, a third speed drive gear 48, and a second speed drive gear 49. Similarly, four driven gears are disposed in sequence on the output shaft 42. The driven gears include a low driven gear 51, a fourth speed driven gear 52, a third speed driven gear 53, and a second speed driven gear 54. In the multistage transmission 39, it is possible to selectively switch the joined state between a neutral state, a first speed-joined state, a second speed-joined state, a third speed-joined state, and a fourth speed-joined state. Details of the multistage transmission 39 are described later.

A friction clutch 55 is incorporated into the engine 25. The friction clutch 55 includes a clutch outer 56 and a clutch hub 57. The driven gear 45b of the primary reduction mechanism 45 is linked to the clutch outer 56. Switching over connection and disconnection between the clutch outer 56 and the clutch hub 57 in the friction clutch 55 is carried out in response to operation of the clutch lever 23. Details of the friction clutch 55 are described later.

An ACG starter 58 is incorporated into the engine 25. The ACG starter 58 includes a rotor 59 and a stator 61. The rotor 59 is joined to the crankshaft 31, which protrudes from the first case half body 26a of the crankcase 26. The rotor 59 has a plurality of magnets arranged in the peripheral direction. The rotor 59 surrounds the outer periphery of the stator 61. The stator 61 has a plurality of coils arranged in the peripheral direction. The coil travels along a trajectory facing the trajectory of the magnet when the rotor 59 rotates. A generator cover 62 is joined to the first case half body 26a of the crankcase 26. The stator 61 is supported on the generator cover 62. The rotor 59 and the stator 61 are housed in a space defined by the generator cover 62 and the first case half body 26a. The ACG starter 58 functions as a starter motor that automatically starts the crankshaft 31 when starting the engine 25, and functions as an AC generator once starting of the engine 25 is confirmed.

A control circuit is connected to the ACG starter 58. The control circuit is formed from for example an ECU (electronic control unit). The control circuit may execute idle stop control in accordance with a control program (software) stored in for example a built-in storage device. When executing idle stop control, the control circuit outputs a signal to stop the combustion action of the engine 25 when a neutral state in which the transmission of power between the input shaft 41 and the output shaft 42 is disconnected is established and frictional contact between a friction plate and a clutch plate is established. Subsequently, when the frictional contact is released again in the neutral state, the control circuit supplies to the ACG starter 58 a command signal to instruct the starter motor to operate.

A kick starter 64 is incorporated into the engine 25. The kick starter 64 includes a kick spindle 65 having an axis parallel to the axis of the output shaft 42. A kick arm 66 is joined to the kick spindle 65. The kick spindle 65 rotates around the axis in response to a kick action of the kick arm 66. The kick spindle 65 is pressed to the reference position around the axis by the action of a torsion spring 67.

The kick starter 64 includes a drive gear (hereinafter 'starter drive gear') 68 and a driven gear (hereinafter 'starter driven gear') 69 for the kick starter. The starter drive gear 68 is relatively rotatably supported on the kick spindle 65. The starter drive gear 68 is linked to the kick spindle 65 by a meshing mechanism. When the kick spindle 65 rotates in one direction in response to a kick action of the kick arm 66, the meshing mechanism joins the starter drive gear 68 to the kick spindle. Here, the starter driven gear 69 meshes with the starter drive gear 68 via an intermediate gear 71. The intermediate gear 71 is relatively rotatably supported on the output shaft 42. The starter driven gear 69 is formed integrally with the driven gear 45b on the crankcase 26 side of the driven gear 45b. The kick action of the kick arm 66 is thus transmitted to the crankshaft 31 via the clutch outer 56.

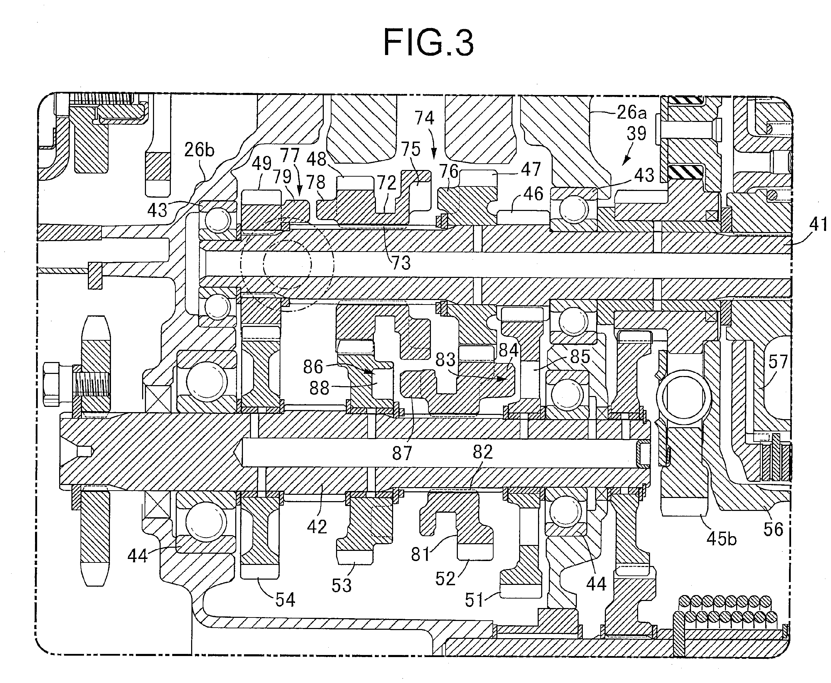

As shown in FIG. 3, in the multistage transmission 39 the low drive gear 46 is cut on the input shaft 41. The fourth speed drive gear 47 is supported on the input shaft 41 relatively rotatably and axially non-displaceably with respect to the input shaft 41. The third speed drive gear 48 is integrated with a first shifter 72. The first shifter 72 is fitted onto a spline 73 cut on the input shaft 41 and relatively non-rotatably and axially displaceably supported on the spline 73. The second speed drive gear 49 is supported on the input shaft 41 relatively rotatably and axially non-displaceably with respect to the input shaft 41.

A first fitting mechanism 74 is formed between the fourth speed drive gear 47 and the third speed drive gear 48. The first fitting mechanism 74 includes a plurality of drive projections 75 formed on the first shifter 72 and a plurality of driven projections 76 formed on the fourth speed drive gear 47. When the first shifter 72 is positioned at an axial reference position on the spline 73, the trajectory of the drive projection 75 moves away from the trajectory of the driven projection 76. In this process, relative rotation between the fourth speed drive gear 47 and the first shifter 72 around the axis of the input shaft 41 is allowed. When the first shifter 72 is displaced by a first distance from the axial reference position toward the fourth speed drive gear 47 and moves to a first operating position, the drive projection 75 enters between peripherally adjacent driven projections 76 on the fourth speed drive gear 47. The drive projection 75 comes into surface contact with the driven projection 76 in the rotational direction of the input shaft 41. A contact face that extends within a virtual plane containing the axis of the input shaft 41 is defined on each of the drive projection 75 and the driven projection 76. The driven projection 76 and the drive projection 75 thus mesh with each other around the axis of the input shaft 41. When meshed, the fourth speed drive gear 47 is relatively non-rotatably joined to the input shaft 41 via the first shifter 72.

A second fitting mechanism 77 is formed between the third speed drive gear 48 and the second speed drive gear 49. The second fitting mechanism 77 includes a plurality of drive projections 78 formed on the first shifter 72 and a plurality of driven projections 79 formed on the second speed drive gear 49. When the first shifter 72 is positioned at the axial reference position on the spline 73, the trajectory of the drive projection 78 moves away from the trajectory of the driven projection 79. In this process, relative rotation between the first shifter 72 and the second speed drive gear 49 around the axis of the input shaft 41 is allowed. When the first shifter 72 is displaced by a second distance from the axial reference position toward the second speed drive gear 49 and moves to a second operating position, the drive projection 78 enters between peripherally adjacent driven projections 79 on the second speed drive gear 49. The drive projection 78 makes surface contact with the driven projection 79 in the rotational direction of the input shaft 41. A contact face that extends within a virtual plane containing the axis of the input shaft 41 is defined on each of the drive projection 78 and the driven projection 79. The drive projection 78 and the driven projection 79 thus mesh with each other around the axis of the input shaft 41. When meshed, the second speed drive gear 49 is relatively non-rotatably joined to the input shaft 41 via the first shifter 72.

The low driven gear 51 is relatively rotatably and axially non-displaceably supported on the output shaft 42. The low driven gear 51 meshes with the low drive gear 46 on the input shaft 41. The fourth speed driven gear 52 is integrated with a second shifter 81. The second shifter 81 is fitted onto a spline 82 cut on the output shaft 42 and relatively non-rotatably and axially displaceably supported on the spline 82. The third speed driven gear 53 is supported on the output shaft 42 relatively rotatably and axially non-displaceably with respect to the output shaft 42. The second speed driven gear 54 is fitted onto a spline cut on the output shaft 42 and relatively non-rotatably and axially non-displaceably supported on the spline. The second speed driven gear 54 meshes with the second speed drive gear 49 on the input shaft 41.

A third fitting mechanism 83 is formed between the low driven gear 51 and the fourth speed driven gear 52. The third fitting mechanism 83 includes a plurality of drive projections 84 formed on the second shifter 81 and a plurality of driven recesses 85 formed on the low driven gear 51. When the second shifter 81 is positioned at an axial reference position on the spline 82, the trajectory of the drive projection 84 moves away from the trajectory of the driven recess 85. In this process, relative rotation between the second shifter 81 and the low driven gear 51 around the axis of the output shaft 42 is allowed. When the second shifter 81 is displaced by a third distance from the axial reference position toward the low driven gear 51 and moves to a third operating position, the drive projection 84 enters the driven recess 85 on the low driven gear 51. The drive projection 84 makes surface contact with the driven recess 85 in the rotational direction of the output shaft 42. A contact face that extends within a virtual plane containing the axis of the output shaft 42 is defined on each of the drive projection 84 and the driven recess 85. The drive projection 84 and the driven recess 85 thus mesh with each other around the axis of the output shaft 42. When meshed, the low driven gear 51 is relatively non-rotatably joined to the output shaft 42 via the second shifter 81.

A fourth fitting mechanism 86 is formed between the fourth speed driven gear 52 and the third speed driven gear 53. The fourth fitting mechanism 86 includes a plurality of drive projections 87 formed on the second shifter 81 and a plurality of driven projections 88 formed on the third speed driven gear 53. When the second shifter 81 is positioned at the axial reference position on the spline 82, the trajectory of the drive projection 87 moves away from the trajectory of the driven projection 88. In this process, relative rotation between the second shifter 81 and the third speed driven gear 53 around the axis of the output shaft 42 is allowed. When the second shifter 81 is displaced by a fourth distance from the axial reference position toward the third speed driven gear 53 and moves to a fourth operating position, the drive projection 87 enters between peripherally adjacent driven projections 88 on the third speed driven gear 53. The drive projection 87 makes surface contact with the driven projection 88 in the rotational direction of the output shaft 42. A contact face that extends within a virtual plane containing the axis of the output shaft 42 is defined on each of the drive projection 87 and the driven projection 88. The drive projection 87 and the driven projection 88 thus mesh with each other around the axis of the output shaft 42. When meshed, the third speed driven gear 53 is relatively non-rotatably joined to the output shaft 42 via the second shifter 81.

When the first shifter 72, that is, the third speed drive gear 48, is positioned at the axial reference position on the input shaft 41, and the second shifter 81, that is, the fourth speed driven gear 52, is positioned at the axial reference position on the output shaft 42, the fourth speed drive gear 47 on the input shaft 41 meshes with the fourth speed driven gear 52 on the output shaft 42, and the third speed drive gear 48 on the input shaft 41 meshes with the third speed driven gear 53 on the output shaft 42. The fourth speed drive gear 47 and the second speed drive gear 49 rotate relative to the input shaft 41. The low driven gear 51 and the third speed driven gear 53 rotate relative to the output shaft 42. In this state, rotational power is not transmitted from the input shaft 41 to the output shaft 42. A neutral state is established in the multistage transmission 39.

When the second shifter 81, that is, the fourth speed driven gear 52, in the neutral state moves on the output shaft 42 from the axial reference position to the third operating position, the drive projection 84 of the second shifter 81 meshes with the driven recess 85 of the low driven gear 51 in the third fitting mechanism 83. The low driven gear 51 is joined to the output shaft 42. In this process, the fourth speed driven gear 52 becomes detached from the fourth speed drive gear 47 of the input shaft 41 accompanying movement of the second shifter 81. Meshing between the fourth speed drive gear 47 and the fourth speed driven gear 52 is canceled. The rotational power of the input shaft 41 transmitted to the low driven gear 51 drives the output shaft 42. In this way, a first speed is established in the multistage transmission 39.

When the first shifter 72, that is, the third speed drive gear 48, in the neutral state moves on the input shaft 41 from the axial reference position to the second operating position, the drive projection 78 of the first shifter 72 meshes with the driven projection 79 of the second speed drive gear 49 in the second fitting mechanism 77. The second speed drive gear 49 is joined to the input shaft 41. In this process, the third speed drive gear 48 becomes detached from the third speed driven gear 53 of the output shaft 42 accompanying movement of the first shifter 72. Meshing between the third speed drive gear 48 and the third speed driven gear 53 is canceled. The rotational power of the input shaft 41 is transmitted to the second speed drive gear 49. Since the second speed drive gear 49 of the input shaft 41 meshes with the second speed driven gear 54 of the output shaft 42, the rotational power of the input shaft 41 drives the output shaft 42. In this way, a second speed is established in the multistage transmission 39.

When the second shifter 81, that is, the fourth speed driven gear 52, in the neutral state moves on the output shaft 41 from the axial reference position to the fourth operating position, the drive projection 87 of the second shifter 81 meshes with the driven projection 88 of the third speed driven gear 53 in the fourth fitting mechanism 86. The third speed driven gear 53 is joined to the output shaft 42. In this process, the fourth speed driven gear 52 becomes detached from the fourth speed drive gear 47 of the input shaft 41 accompanying movement of the second shifter 81. Meshing between the fourth speed drive gear 47 and the fourth speed driven gear 52 is canceled. The rotational power of the input shaft 41 is transmitted to the third speed driven gear 53 and drives the output shaft 42. In this way, a third speed is established in the multistage transmission 39.

When the first shifter 72, that is, the third speed drive gear 48, in the neutral state moves on the input shaft 41 from the axial reference position to the first operating position, the drive projection 75 of the first shifter 72 meshes with the driven projection 76 of the fourth speed drive gear 47 in the first fitting mechanism 74. The fourth speed drive gear 47 is joined to the input shaft 41. In this process, the third speed drive gear 48 becomes detached from the third speed driven gear 53 of the output shaft 42 accompanying movement of the first shifter 72. Meshing between the third speed drive gear 48 and the third speed driven gear 53 is canceled. The rotational power of the input shaft 41 is transmitted to the fourth speed drive gear 47. Since the fourth speed drive gear 47 of the input shaft 41 meshes with the fourth speed driven gear 52 of the output shaft 42, the rotational power of the input shaft 41 drives the output shaft 42. In this way, a fourth speed is established in the multistage transmission 39.

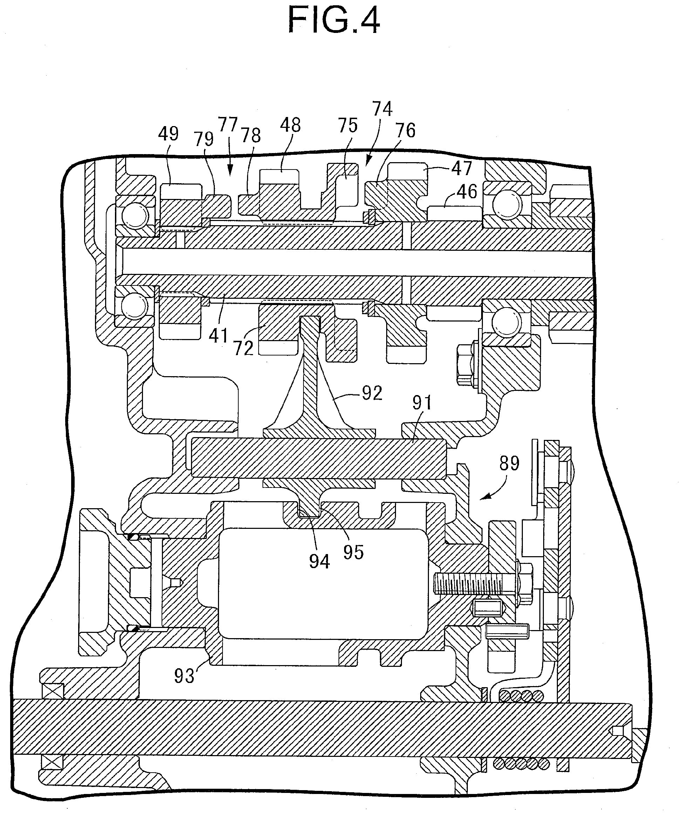

As shown in FIG. 4, a shift mechanism 89 is incorporated into the multistage transmission 39. The shift mechanism 89 includes a guide shaft 91 extending in parallel with the axis of the input shaft 41. A shift fork 92 is axially displaceably supported on the guide shaft 91. The shift fork 92 extends in a direction orthogonal to the axis of the guide shaft 91 and is linked to the first shifter 72 on the input shaft 41.

The shift mechanism 89 includes a shift drum 93. The shift drum 93 is supported so that it can rotate around the axis extending in parallel with the axis of the guide shaft 91. A cam groove 94 is cut on an outer peripheral face of the shift drum 93. The cam groove 94 is displaced in the axial direction of the shift drum 93 according to the rotational angle. A pin 95 protruding from the shift fork 92 in a direction orthogonal to the axis of the guide shaft 91 is inserted into the cam groove 94. In this way, the shift fork 92 moves along the guide shaft 91 in response to rotation of the shift drum 93. Movement of the shift fork 92 causes the first shifter 72 to move on the input shaft 41. A similar shift mechanism is also associated with the second shifter 81 on the output shaft 42.

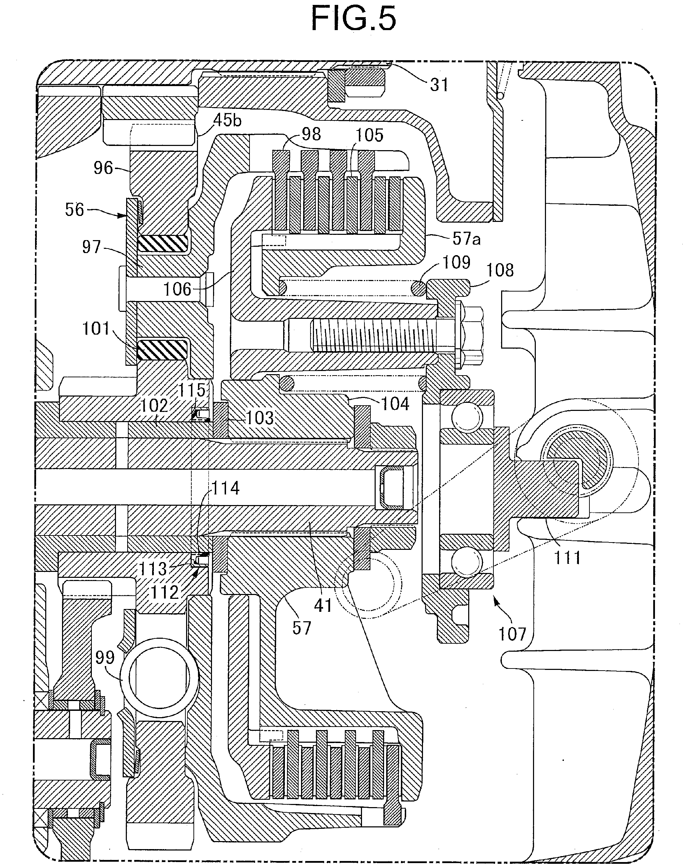

As shown in FIG. 5, the clutch outer 56 includes a clutch gear 96 that retains the above driven gear 45b on its outer periphery and a retaining member 97 that is supported on the clutch gear 96 so that the relative angle around the axis of the input shaft 41 can be changed. The clutch gear 96 is supported on the clutch hub 57 so that it can undergo relative rotation around the axis of the input shaft 41 of the multistage transmission 39. The clutch gear 96 meshes with the drive gear 45a on the crankshaft 31. The drive gear 45a is relatively non-rotatably joined to the crankshaft 31 protruding from the second case half body 26b of the crankcase 26. In this way, the rotation of the crankshaft 31 is transmitted to the clutch gear 96 at a predetermined reduction ratio.

A plurality of friction plates 98 are retained by a retaining member 97. The friction plate 98 is supported on the retaining member 97 so that it can be displaced in the axial direction of the input shaft 41. The friction plate 98 rotates together with the retaining member 97. A helical spring 99 and a damper 101 for absorbing an impact in the peripheral direction are disposed between the retaining member 97 and the clutch gear 96. The power of the crankshaft 31 is transmitted to the retaining member 97 around the axis of the input shaft 41 via the clutch gear 96.

The clutch hub 57 is relatively non-rotatably supported on the input shaft 41. The clutch hub 57 includes a guide tube 102 relatively non-rotatably fitted around the input shaft 41 and a retaining member 104 pushed against the guide tube 102 in the axial direction via a washer 103. The clutch gear 96 is relatively rotatably supported on the guide tube 102. The retaining member 97 of the clutch outer 56 surrounds the outer periphery of the retaining member 104. A plurality of clutch plates 105 are retained by the retaining member 104. The clutch plate 105 is supported on the retaining member 104 so that it can undergo relative displacement in the axial direction of the input shaft 41. The clutch plate 105 is sandwiched between the friction plates 98.

The friction clutch 55 includes a pressure plate 106 and a clutch lifter 107. The pressure plate 106 is fitted to the clutch hub 57 so that it can be displaced in the axial direction of the input shaft 41. The friction plate 98 and the clutch plate 105 are sandwiched between the pressure plate 107 and a flange 57a of the clutch hub 57. A lifter plate 108 of the clutch lifter 107 is fastened to the pressure plate 106. A clutch spring 109 is sandwiched between the lifter plate 108 and the clutch hub 57. The clutch spring 109 exhibits a resilient force that presses the pressure plate 106 against the flange 57a of the clutch hub 57. The friction plate 98 and the clutch plate 105 are frictionally joined by action of the clutch spring 109. The clutch outer 56 is joined to the clutch hub 57 based on such frictional contact.

A lifter rod 111 is linked to the lifter plate 108. Rotation of the lifter plate 108 around the axis of the input shaft 41 relative to the lifter rod 111 is ensured. When in association with operation of the clutch lever 23 the lifter rod 111 is pushed in against the resilient force of the clutch spring 109, intimate contact between the friction plate 98 and the clutch plate 105 is canceled. The friction clutch 55 is disconnected.

A friction damper 112 is disposed between the clutch outer 56 and the clutch hub 57. The friction damper 112 includes an annular frame body 113 fitted into the clutch gear 96 and a transmission member 114 that is retained inside the frame body 113 and is in contact with the guide tube 102 of the clutch hub 57. An annular step 115 is formed in the clutch gear 96 along the outer periphery of the guide tube 102. The step 115 defines an annular groove opening on the shaft end side of the input shaft 41 in cooperation with the outer periphery of the guide tube 102. The frame body 113 is thus fitted into the clutch gear 96 from the shaft end side protruding from the crankcase 26.

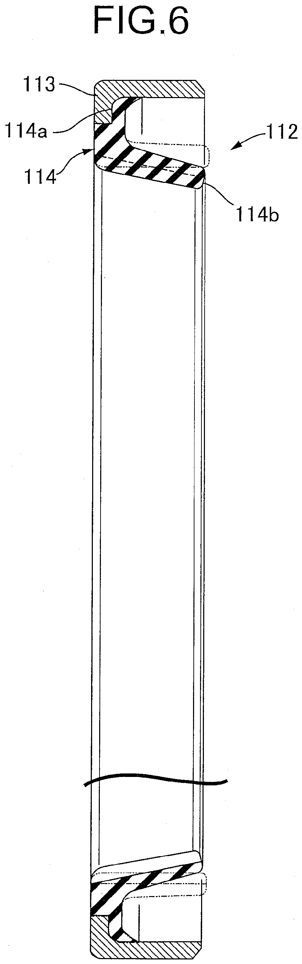

As shown in FIG. 6, the transmission member 114 includes an annular fixing frame 114a that is adhered to an inner face of the frame body 113 and a contact piece 114b that is biased inward in going away from the fixing frame 114a in parallel with the outer periphery of the frame body 113. The fixing frame 114a and the contact piece 114b may be molded integrally from rubber. The contact piece 114b is in surface contact with the guide tube 102 with a predetermined contact pressure. Based on the contact pressure of the contact piece 114b rotation of the clutch gear 96 is transmitted to the clutch hub 57 around the axis of the input shaft 41.

While traveling, in the friction clutch 55 the friction plate 98 and the clutch plate 105 are frictionally joined. The clutch hub 57 is linked to the clutch outer 56. In the multistage transmission 39 any one of the first speed, the second speed, the third speed, or the fourth speed is established. The power of the crankshaft 31 is transmitted to the rear wheel WR at a predetermined reduction ratio via the friction clutch 55 and the multistage transmission 39.

While stopping, if in the multistage transmission 39 the neutral state is established, a driver releases the clutch lever 23, thus enabling the friction clutch 55 to be connected. Prior to the friction clutch 55 being connected, the driver once disconnects the friction clutch 55, thus establishing the neutral state in the multistage transmission 39. When the driver releases the clutch lever 23 again, the friction clutch 55 is shifted again to the connected state, and the control circuit detects the neutral state of the multistage transmission 39 and the reconnection of the friction clutch 55. The control circuit carries out idle stop in the engine 25. For example, a signal is supplied from the control circuit to a throttle valve, thus stopping the combustion action of the engine 25. Rotation of the crankshaft 31 stops. In this process, since no driving force is inputted to the input shaft 41 of the multistage transmission 39, rotation of the drive gears 46 to 49 stops. During idle stop, since the two-wheeled motor vehicle 11 is in a stationary state, no driving force is inputted to the output shaft 42 of the multistage transmission 39. Rotation of the driven gears 51 to 54 also stops.

Prior to restarting traveling, the driver establishes for example the first speed in the multistage transmission 39 based on a shift operation. Prior to the shift operation, the driver operates the clutch lever 23. When the frictional contact is thus released again and the friction clutch 55 is disconnected, the control circuit supplies a command signal to the ACG starter 58. The ACG starter 58 receives the command signal and drives the crankshaft 31. The clutch outer 56 is rotated by the action of the primary reduction mechanism 45. Part of the power is transmitted from the clutch outer 56 to the clutch hub 57 by the action of the friction damper 112. The power of the clutch outer 56 is transmitted to the low driven gear 51 via the low drive gear 46 on the stationary output shaft 42. The low driven gear 51 rotates upon receiving power from the clutch hub 57 via the low drive gear 46. Since relative rotation between the second shifter 81 and the low driven gear 51 linked to the clutch hub 57 via the low drive gear 46 is caused as described above, the drive projection 84 can enter the driven recess 85. In this way, a joined state can be smoothly established between the drive projection 84 and the driven recess 85. Here, the low driven gear 51 functions as an active gear, and the fourth speed driven gear 52 integrated with the second shifter 81 functions as a follower gear.

The power of the crankshaft 31 is inputted into the clutch gear 96 of the clutch outer 56. Power is transmitted from the clutch gear 96 to the retaining member 97 via the damper 101. Since the friction damper 112 is retained on the clutch gear 96, compared with a case in which a friction damper 112 is linked to a retaining member 97, power that is transmitted to the clutch gear 96 can be transmitted to the clutch hub 57 without going through the damper 101 and without delay.

The friction damper 112 includes the annular frame body 113 fitted into the clutch gear 96 via the shaft end side protruding from the crankcase 26 and the transmission member 114 retained inside the frame body 113. Since the friction damper 112 is fitted into the clutch gear 96 via the shaft end side, when carrying out assembly, the friction damper 112 can easily be fixed to the clutch gear 96.

When meshing with the starter drive gear 68, the starter driven gear 69 is formed integrally with the clutch gear 96 via the crankcase 26 side of the clutch gear 96. Since in the clutch gear 96 of the clutch outer 56 the starter driven gear 69 is integrated therewith on the side opposite to the friction damper 112, the radial dimension of the starter driven gear 69 can be decreased.

## Claims

1. A power transmission device comprising
a clutch outer (56) that is linked to a power input side and retains a friction plate (98),
a clutch hub (57) that is supported relatively rotatably with respect to the clutch outer (56) and retains a clutch plate (105) that can be in frictional contact with the friction plate (98),
an active gear (52) that is linked to the clutch hub (57) and has an engagement projection (84),
a follower gear (51) having an engagement recess (85) and being coaxially supported with respect to the active gear (52) which is displaceable in an axial direction , wherein the engagement projection (84) engages with the engagement recess (85) when moving the active gear (52) in the axial direction from an axial reference position to an operating position, and
a friction damper (112) that is present between the clutch outer (56) and the clutch hub (57).

2. The power transmission device according to Claim 1, wherein the clutch outer (56) comprises
a clutch gear (96) that retains the friction damper (112) while pressing the friction damper (112) against the clutch hub (57),
a retaining member (97) that is supported on the clutch gear (96) so that the retaining member (97) can undergo relative rotation around the rotating shaft of the clutch hub (57) and that retains the friction plate (98), and
a damper (101) that is disposed between the clutch gear (96) and the retaining member (97) in a peripheral direction and links the clutch gear (96) and the retaining member (97) in the peripheral direction.

3. The power transmission device according to Claim 2, wherein the friction damper (112) comprises an annular frame body (113) that is fitted into the clutch gear (96) via a shaft end that protrudes from a crankcase (26) and a transmission member (114) that is retained inside the frame body (113).

4. The power transmission device according to Claim 3, comprising a starter driven gear (69) for a kick starter that is formed integrally with the clutch gear (96) on the crankcase (26) side of the clutch gear (96) and meshes with a starter drive gear (68) of a kick starter (64).

5. The power transmission device according to any one of Claims 1 to 4, comprising
a control circuit that stops a combustion action of an engine (25) when a multistage transmission (39) that includes a first shaft (42) supporting a drive gear or a driven gear including the active gear (52) and the follower gear (51) and a second shaft (41) supporting a driven gear or drive gear that can mesh with the above drive gear or driven gear establishes a neutral state in which power transmission between the first shaft (42) and the second shaft (41) is disconnected, and frictional contact between the friction plate (98) and the clutch plate (105) is established, and
a starter motor (58) that is connected to a crankshaft (31) of the engine (25) and receives a command signal from the control circuit when the frictional contact is released again in the neutral state, thus automatically starting the crankshaft (31).

## Patentansprüche

1. Leistungsübertragungsvorrichtung, die aufweist
ein Kupplungsaußenelement (56), das mit einer Leistungseingangsseite verbunden ist und eine Reibungsplatte (98) hält,
eine Kupplungsnabe (57), die relativ zum Kupplungsaußenelement (56) rotierbar gehalten wird und eine Kupplungsplatte (105) hält, die in Reibungskontakt mit der Reibungsplatte (98) stehen kann,
ein aktives Zahnrad (52), das mit der Kupplungsnabe (57) verbunden ist und einen Eingriffsvorsprung (84) aufweist,
ein Mitlaufzahnrad (51), das eine Eingriffsaussparung (85) aufweist und koaxial bezüglich des aktiven Zahnrads (52) gehalten wird, das in einer axialen Richtung versetzbar ist, wobei der Eingriffsvorsprung (84) in die Eingriffsaussparung (85) eingreift, wenn sich das aktive Zahnrad (52) in der axialen Richtung von einer axialen Referenzposition zu einer Betriebsposition bewegt, und
einen Reibungsdämpfer (112), der zwischen dem Kupplungsaußenelement (56) und der Kupplungsnabe (57) vorhanden ist.

2. Leistungsübertragungsvorrichtung nach Anspruch 1, wobei das Kupplungsaußenelement (56) aufweist
ein Kupplungszahnrad (56), das den Reibungsdämpfer (112) hält, während es den Reibungsdämpfer (112) gegen die Kupplungsnabe (57) presst,
ein Halteelement (97), das am Kupplungszahnrad (96) gehalten wird, sodass das Halteelement (97) einer relativen Rotation um die Rotationswelle der Kupplungsnabe (57) unterzogen werden kann und das die Reibungsplatte (98) hält, und
einen Dämpfer (101), der zwischen den Kupplungszahnrad (96) und dem Haltelement (97) in einer Umfangsrichtung angeordnet ist und das Kupplungszahnrad (96) und des Halteelement (97) in der Umfangsrichtung verbindet.

3. Leistungsübertragungsvorrichtung nach Anspruch 2, wobei der Reibungsdämpfer (112) einen ringförmigen Rahmenkörper (113) aufweist, der in das Kupplungszahnrad (96) über ein Wellenende eingepasst ist, das von einem Kurbelwellengehäuse (26) hervorsteht, und ein Getriebeelement (114), das im Rahmenkörper (113) gehalten wird.

4. Leistungsübertragungsvorrichtung nach Anspruch 3, die ein angetriebenes Startzahnrad (69) für einen Kickstarter aufweist, der integral mit dem Kupplungszahnrad (96) an der Seite des Kurbelwellengehäuses (26) des Kupplungszahnrads (96) ausgebildet ist und mit einem Startantriebszahnrad (68) des Kickstarters (64) eingreift.

5. Leistungsübertragungsvorrichtung nach einem der Ansprüche 1 bis 4, die einen Steuerschaltkreis aufweist, der eine Verbrennungsaktion eines Motors (25) anhält, wenn ein Mehrstufengetriebe (39), das eine erste Welle (42) aufweist, die ein Antriebszahnrad oder ein angetriebenes Zahnrad hält, das das aktive Zahnrad (52) und das Mitlaufzahnrad (51) aufweist, und eine zweite Welle (41), die ein angetriebenes Zahnrad und ein Antriebszahnrad hält, das mit dem obigen Antriebszahnrad oder dem angetriebenen Zahnrad eingreifen kann, einen neutralen Zustand errichtet, in dem die Leistungsübertragung zwischen der ersten Welle (42) und der zweiten Welle (41) getrennt ist und ein Reibungskontakt zwischen der Reibungsplatte (98) und der Kupplungsplatte (105) errichtet ist, und
einen Startermotor (58), der mit einer Kurbelwelle (31) des Motors (25) verbunden ist und ein Befehlssignal vom Steuerschaltkreis empfängt, wenn der Reibungskontakt im neutralen Zustand wieder gelöst wird, wodurch automatisch die Kurbelwelle (31) gestartet wird.

## Revendications

1. Dispositif de transmission de puissance comprenant
un extérieur d'embrayage (56) qui est relié à un côté d'entrée de puissance et qui retient une plaque de friction (98),
un moyeu d'embrayage (57) qui est supporté de manière à pouvoir tourner relativement par rapport à l'extérieur d'embrayage (56) et retient une plaque d'embrayage (105) qui peut être en contact de friction avec la plaque de friction (98),
un engrenage actif (52) qui est relié au moyeu d'embrayage (57) et qui a une saillie d'engagement (84),
un engrenage mené (51) ayant un évidement d'engagement (85) et étant supporté de manière coaxiale par rapport à l'engrenage actif (52) qui est déplaçable dans un sens axial, dans lequel la saillie d'engagement (84) s'engage dans l'évidement d'engagement (85) lors du déplacement de l'engrenage actif (52) dans le sens axial depuis une position de référence axiale jusqu'à une position de fonctionnement, et
un amortisseur à friction (112) qui est présent entre l'extérieur d'embrayage (56) et le moyeu d'embrayage (57).

2. Dispositif de transmission de puissance selon la revendication 1, dans lequel l'extérieur d'embrayage (56) comprend
un engrenage d'embrayage (96) qui retient l'amortisseur à friction (112) tout en pressant l'amortisseur à friction (112) contre le moyeu d'embrayage (57),
un organe de retenue (97) qui est supporté sur l'engrenage d'embrayage (96) de sorte que l'organe de retenue (97) puisse subir une rotation relative autour de l'arbre de rotation du moyeu d'embrayage (57) et qui retient la plaque de friction (98), et
un amortisseur (101) qui est disposé entre l'engrenage d'embrayage (96) et l'organe de retenue (97) dans un sens périphérique et qui relie l'engrenage d'embrayage (96) et l'organe de retenue (97) dans le sens périphérique.

3. Dispositif de transmission de puissance selon la revendication 2, dans lequel l'amortisseur à friction (112) comprend un corps de cadre annulaire (113) qui est ajusté dans l'engrenage d'embrayage (96) via une extrémité d'arbre qui fait saillie depuis un carter moteur (26) et un organe de transmission (114) qui est retenu à l'intérieur du corps de cadre (113).

4. Dispositif de transmission de puissance selon la revendication 3, comprenant un engrenage entraîné de starter (69) pour un kick starter qui est formé intégralement avec l'engrenage d'embrayage (96) sur le côté carter moteur (26) de l'engrenage d'embrayage (96) et s'engrène avec un engrenage d'entraînement de starter (68) d'un kick starter (64).

5. Dispositif de transmission de puissance selon l'une quelconque des revendications 1 à 4, comprenant
un circuit de commande qui arrête une action de combustion d'un moteur (25) lorsqu'une transmission multi-étages (39) qui comporte un premier arbre (42) supportant un engrenage d'entraînement ou un engrenage entraîné comportant l'engrenage actif (52) et l'engrenage mené (51) et un deuxième arbre (41) supportant un engrenage entraîné ou un engrenage d'entraînement qui peut s'engrener avec l'engrenage d'entraînement ou l'engrenage entraîné au-dessus établit un état de point mort dans lequel une transmission de puissance entre le premier arbre (42) et le deuxième arbre (41) est déconnectée, et un contact de friction entre la plaque de friction (98) et la plaque d'embrayage (105) est établi, et
un moteur de starter (58) qui est connecté à un vilebrequin (31) du moteur (25) et reçoit un signal d'instruction en provenance du circuit de commande lorsque le contact de friction est relâché à nouveau dans l'état de point mort, en démarrant ainsi automatiquement le vilebrequin (31).
